# EUROPEAN PATENT APPLICATION

(11) **EP 4 761 059 A1**
(43) Date of publication of application: **17.06.2026**
(21) Application number: 24921798.5
(22) Date of filing: 24.12.2024
(51) Int. Cl.: H02J 15/00, H01M 10/613

(54) **EXHAUST ENERGY STORAGE CABINET**

(30) Priority: 31.01.2024 CN 202420247493 U
(71) Applicant: Huawei Digital Power Technologies Co., Ltd., Shenzhen, Guangdong 518043 (CN)
(72) Inventor: HUANG, Wei, Shenzhen, Guangdong 518043 (CN); NIU, Chuankai, Shenzhen, Guangdong 518043 (CN); DING, Qiufeng, Shenzhen, Guangdong 518043 (CN)
(74) Representative: Maiwald GmbH
(86) International application number: PCT/CN2024/141894
(87) International publication number: WO 2025/161776

(57) **Abstract**

The present disclosure provides an energy storage cabinet with exhaust, and pertains to the field of battery energy storage technologies. An exhaust air duct assembly in the energy storage cabinet with exhaust includes an air duct housing extending in a height direction of a cabinet, a first flow guide member, a first fan, and a second fan. The first flow guide member is located in the air duct housing, and between an air duct side wall of the air duct housing and an inner wall of the cabinet that are spaced apart and opposite to each other, and covers at least a part of a second air inlet. A joint between a first edge of the first flow guide member and the air duct side wall is located between a first air inlet and the second air inlet, and a second edge of the first flow guide member is spaced apart from the air duct side wall, to form an air outlet. The exhaust air duct assembly in the energy storage cabinet with exhaust can reduce air intake interference between fans, thereby increasing exhaust efficiency.

## Description

This application claims priority to Chinese Patent Application No. 202420247493.8, filed on January 31, 2024, and entitled "ENERGY STORAGE CABINET WITH EXHAUST", which is incorporated herein by reference in its entirety.

### TECHNICAL FIELD

The present disclosure relates to the field of battery energy storage technologies, and in particular, to an energy storage cabinet with exhaust.

### BACKGROUND

An energy storage cabinet is an apparatus that integrates a plurality of energy storage batteries and electrical control components such as a battery management system and a power control system into one cabinet to intelligently store and release electric energy. When a lithium-ion battery in the energy storage cabinet encounters a thermal runaway due to thermal abuse, mechanical abuse, electric abuse, or the like, a large amount of flammable and explosive gas is released. If the flammable and explosive gas cannot be discharged in time, there is a risk of explosion. Therefore, the energy storage cabinet is required to have a good exhaust function.

In a related technology, a fan is usually disposed in the energy storage cabinet to achieve active exhaust. When a plurality of fans are disposed and the plurality of fans exhaust air through a same air duct, the fans easily interfere with each other. Consequently, exhaust efficiency is reduced.

### SUMMARY

The present disclosure provides an energy storage cabinet with exhaust, so that air intake interference between fans can be reduced, thereby increasing exhaust efficiency.

The energy storage cabinet with exhaust includes a cabinet and an exhaust air duct assembly, the cabinet is configured to accommodate a plurality of battery packs, the exhaust air duct assembly is fastened to an inner wall of the cabinet, and the exhaust air duct assembly includes an air duct housing extending in a height direction of the cabinet, a first flow guide member, a first fan, and a second fan; and the height direction is a direction pointing from the top to the bottom of the cabinet.

The air duct housing includes an air duct side wall and a circumferential retaining wall, the air duct side wall and the inner wall are spaced apart and opposite to each other, and the circumferential retaining wall surrounds an edge of the air duct side wall and is disposed between the air duct side wall and the inner wall.

The air duct side wall is provided with a first air inlet and a second air inlet that are distributed in the height direction, and the second air inlet is located below the first air inlet; and the first fan is configured to draw gas inside the cabinet into the air duct housing through the first air inlet, and the second fan is configured to draw gas inside the cabinet into the air duct housing through the second air inlet.

The first flow guide member is located in the air duct housing and between the air duct side wall and the inner wall, and covers at least a part of the second air inlet; and a joint between a first edge of the first flow guide member and the air duct side wall is located between the first air inlet and the second air inlet, a second edge of the first flow guide member is spaced apart from the air duct side wall to form an air outlet, and the first edge and the second edge are two edges that are opposite to each other in the height direction in the first flow guide member.

In the solution shown in the present disclosure, the exhaust air duct assembly encloses an air duct by using the air duct side wall spaced apart from and opposite to the inner wall of the cabinet in the energy storage cabinet with exhaust, and the circumferential retaining wall disposed between the air duct side wall and the inner wall, so that the air duct is used by the fan to draw gas into the air duct housing for flowing. The first flow guide member that covers at least a part of an air inlet (the second air inlet) in a downstream of the air duct is disposed in the air duct housing, and a side that is of the first flow guide member and that is close to an air inlet (the first air inlet) in an upstream of the air duct is connected to the air duct side wall, so that the first flow guide member is configured to isolate the two air inlets, thereby reducing vortexes of the two fans, reducing flow disturbance, and preventing airflow that is discharged by an upstream fan (the first fan) into the air duct through the air inlet (the first air inlet) in the upstream from escaping from the air inlet in the downstream, so that air intake interference between fans can be reduced, and exhaust efficiency can be increased.

In a possible implementation, a distance between the second edge of the first flow guide member and the air duct side wall is less than a distance between the air duct side wall and the inner wall.

In the solution shown in the present disclosure, the first edge of the first flow guide member is connected to the air duct side wall, and the second edge opposite to the first edge is lifted relative to the air duct side wall. An uplift height of the second edge (that is, the distance between the second edge and the air duct side wall) is limited to being less than a distance between the air duct side wall and the inner wall that is in the cabinet and that is used to install the air duct housing, so that the entire first flow guide member may be accommodated in space enclosed by the air duct side wall and the circumferential retaining wall, without affecting assembly between the air duct housing and the inner wall of the cabinet.

In a possible implementation, the first flow guide member is a plate-like member, and the first flow guide member tilts in the height direction toward a direction away from the air duct side wall.

In a possible implementation, the first flow guide member includes a first flow guide plate and a second flow guide plate that are connected in a bent manner, the first edge of the first flow guide member is an edge that is of the first flow guide plate and that is close to the first air inlet, the other edge of the first flow guide plate is connected to the second flow guide plate, and the first flow guide plate tilts in the height direction toward a direction away from the air duct side wall; and the second flow guide plate covers at least a part of the second air inlet.

In the solution shown in the present disclosure, a part that is of the first flow guide member and that is close to the first air inlet or the entire first flow guide member is disposed to tilt in the height direction of the cabinet (that is, an air outlet direction of airflow in the air duct housing) toward a direction away from the air duct side wall, so that the tilted part can provide guidance for airflow that enters an air duct through the first air inlet, to enable the airflow to flow in the air outlet direction toward an air outlet end of the air duct, thereby reducing flowing resistance and helping increase exhaust efficiency.

In a possible implementation, the second flow guide plate is perpendicular to an opening direction of the second air inlet; and a distance between the second flow guide plate and the air duct side wall is less than a distance between the air duct side wall and the inner wall.

In the solution shown in the present disclosure, the second flow guide plate is disposed perpendicular to the opening direction of the second air inlet. Regardless of first airflow entering the air duct through the first air inlet or second airflow entering the air duct through the second air inlet, the second flow guide plate can provide flow channel space with a small size change in a depth direction of the air duct, so that a guidance function of the second flow guide plate on the first airflow and the second airflow can be well-balanced. An edge of a side that is of the second flow guide plate and that is away from the first flow guide plate is the second edge in the first flow guide member, to ensure that a distance between the entire second flow guide plate and the air duct side wall is less than the distance between the air duct side wall and the inner wall of the cabinet, that is, the following may be met: The distance between the second edge of the first flow guide member and the air duct side wall is less than the distance between the air duct side wall and the inner wall.

In a possible implementation, the second flow guide plate tilts in the height direction toward a direction away from the air duct side wall, and an included angle between a first plate surface that is of the first flow guide plate and that faces away from the second air inlet and an opening direction of the second air inlet is less than an included angle between a second plate surface that is of the second flow guide plate and that faces away from the second air inlet and the opening direction of the second air inlet.

In the solution shown in the present disclosure, when the second flow guide plate tilts relative to the air duct side wall, a tilt degree of the second flow guide plate is set to be less than a tilt degree of the first flow guide plate, so that a side that is of the second flow guide plate and that is close to the second air inlet is more attached to the air duct side wall, and the first airflow can enter flow channel space (the flow channel space is enclosed by a side that is of the first flow guide plate or the second flow guide plate and that faces away from the second air inlet and a mounting carrier, for example, a cabinet door) of a large size from flow channel space of a small size when the first airflow that enters the air duct through the first air inlet flows through the first flow guide plate and the second flow guide plate in sequence in the air outlet direction, to guide the first airflow to flow in the air outlet direction, thereby helping increase exhaust efficiency.

In a possible implementation, an orthographic projection of the second air inlet on a specified plane is located in an orthographic projection of the first flow guide member on the specified plane, and the specified plane is perpendicular to an opening direction of the second air inlet.

In the solution shown in the present disclosure, on the specified plane perpendicular to the opening direction of the second air inlet, the orthographic projection of the second air inlet is located in the orthographic projection of the first flow guide member, so that the first flow guide member can cover the entire second air inlet, to fully isolate the first air inlet from the second air inlet.

In a possible implementation, at least one side edge of the first flow guide member is connected to the circumferential retaining wall, and the side edge is connected between the first edge and the second edge.

In the solution shown in the present disclosure, the side of the first flow guide member is connected to the circumferential retaining wall, so that except for the second air inlet and the exhaust port, a remaining part of flow channel space enclosed by the first flow guide member, the air duct side wall, and the circumferential retaining wall is closed, to improve an isolation effect of the first flow guide member on the first air inlet and the second air inlet, thereby reducing air intake interference between fans, and helping increase exhaust efficiency.

In a possible implementation, the exhaust air duct assembly further includes at least one second flow guide member, and the second flow guide member is configured to guide airflow that enters the air duct housing through the first air inlet.

The at least one second flow guide member includes a third flow guide plate. The third flow guide plate is rotatably connected to the circumferential retaining wall; or the third flow guide plate is fastened to the circumferential retaining wall, and the third flow guide plate tilts in the height direction toward a direction away from the air duct side wall.

In the solution shown in the present disclosure, because the first flow guide member may hinder, from flowing in the air outlet direction, the first airflow that enters the air duct through the first air inlet, the third flow guide plate is disposed to guide the first airflow, so that the first airflow can flow in the air outlet direction, thereby reducing flowing resistance of the air duct and ensuring exhaust efficiency.

In a possible implementation, when the third flow guide plate is fastened to the circumferential retaining wall, an included angle between a third plate surface that is of the third flow guide plate and that faces away from the second air inlet and an opening direction of the second air inlet is not greater than an included angle between a first plate surface that is of the first flow guide plate and that faces away from the second air inlet and the opening direction of the second air inlet.

In the solution shown in the present disclosure, when the third flow guide plate is fastened and tilts relative to the air duct side wall, a tilt degree of the third flow guide plate is set to be greater than the tilt degree of the first flow guide plate, so that the first airflow can enter flow channel space (the flow channel space is enclosed by a side that is of the third flow guide plate or the first flow guide plate and that faces away from the second air inlet and a mounting carrier, for example, a cabinet door) of a large size from flow channel space of a small size when the first airflow that enters the air duct through the first air inlet flows through the third flow guide plate and the first flow guide plate in sequence in the air outlet direction, to guide the first airflow to flow in the air outlet direction, thereby helping increase exhaust efficiency.

In a possible implementation, the second flow guide member further includes a fourth flow guide plate, the fourth flow guide plate is connected to an end that is of the third flow guide plate and that is close to the air duct side wall, and the fourth flow guide plate is parallel to an opening direction of the first air inlet.

In the solution shown in the present disclosure, a flow guide length of the fourth flow guide plate is increased, and the fourth flow guide plate is parallel to the opening direction of the first air inlet, so that the first airflow that enters the air duct through the first air inlet is not hindered, thereby further reducing flowing resistance of the air duct, and helping increase exhaust efficiency.

In a possible implementation, the air duct side wall includes a first air intake section and a second air intake section, the first air inlet is provided on the first air intake section, and the second air inlet is provided on the second air intake section.

The first air intake section and the second air intake section are connected in a bent manner, and an end that is of the first air intake section and that is away from the second air intake section tilts toward a direction close to the first flow guide member.

In the solution shown in the present disclosure, when the exhaust air duct assembly is assembled together with a mounting carrier, for example, a cabinet door of the cabinet, the opening direction of the first air inlet may intersect with the mounting carrier at an obtuse angle, so that the mounting carrier may be used as a flow guide structure to guide the first airflow to the air outlet end of the air duct, thereby preventing the first airflow generated by the first fan from directly blowing the mounting carrier, reducing flowing resistance of air intake, and helping increase exhaust efficiency.

In a possible implementation, the exhaust air duct assembly further includes a filter member; and
the air duct housing includes an air intake cavity, a filter cavity, and an air outlet cavity that are disposed in sequence in the height direction, where the first air inlet and the second air inlet are located in the air intake cavity, the filter member is located in the filter cavity, and the air outlet cavity communicates with an exhaust port provided on the cabinet, to discharge airflow in the air duct housing.

In the solution shown in the present disclosure, the filter member is disposed on a side that is of the second air inlet and that is away from the first air inlet, so that a medium such as dust or water vapor that enters the first air inlet and the second air inlet from an external environment through the exhaust port on the cabinet can be filtered, thereby preventing a harmful medium from entering the cabinet of the energy storage cabinet with exhaust through the first air inlet and the second air inlet.

In a possible implementation, the cabinet includes a cabinet door, an inner wall of the cabinet door faces the plurality of battery packs, and the exhaust air duct assembly is fastened to the inner wall of the cabinet door.

In the solution shown in the present disclosure, the exhaust air duct assembly is disposed on the cabinet, so that mounting is facilitated and accommodation space occupied in the cabinet body for disposing a battery pack can be reduced.

In a possible implementation, the exhaust port is provided on the cabinet door, and the exhaust port communicates with space enclosed by the air duct housing and the inner wall.

In the solution shown in the present disclosure, the exhaust port is disposed on the cabinet door, so that the exhaust port directly communicates with the exhaust air duct assembly disposed on the cabinet door. In addition, the exhaust air duct assembly may be blocked between the exhaust port that communicates with an external environment and the battery pack, thereby helping avoid impact on the battery pack caused by a harmful medium in the external environment directly entering the cabinet body.

### BRIEF DESCRIPTION OF DRAWINGS

FIG. 1 is a diagram of a structure of an energy storage cabinet with exhaust according to an example embodiment of the present disclosure;
FIG. 2 is a diagram of a first structure of an air duct side of an exhaust air duct assembly in an energy storage cabinet with exhaust according to an example embodiment of the present disclosure;
FIG. 3 is a diagram of a first structure of an air intake side of an exhaust air duct assembly in an energy storage cabinet with exhaust according to an example embodiment of the present disclosure;
FIG. 4 is a diagram of a first cross-sectional structure of an exhaust air duct assembly in an energy storage cabinet with exhaust according to an example embodiment of the present disclosure;
FIG. 5 is a diagram of a second cross-sectional structure of an exhaust air duct assembly in an energy storage cabinet with exhaust according to an example embodiment of the present disclosure;
FIG. 6 is a diagram of a third cross-sectional structure of an exhaust air duct assembly in an energy storage cabinet with exhaust according to an example embodiment of the present disclosure;
FIG. 7 is a diagram of a fourth cross-sectional structure of an exhaust air duct assembly in an energy storage cabinet with exhaust according to an example embodiment of the present disclosure;
FIG. 8 is a diagram of a front-view structure of an air intake side in FIG. 7;
FIG. 9 is a diagram of a front-view structure of an air duct side in FIG. 7;
FIG. 10 is a diagram of a fifth cross-sectional structure of an exhaust air duct assembly in an energy storage cabinet with exhaust according to an example embodiment of the present disclosure;
FIG. 11 is an enlarged view of a portion A in FIG. 10;
FIG. 12 is a diagram of a side-view structure in FIG. 10;
FIG. 13 is a diagram of a sixth cross-sectional structure of an exhaust air duct assembly in an energy storage cabinet with exhaust according to an example embodiment of the present disclosure;
FIG. 14 is a diagram of a second structure of an air intake side of an exhaust air duct assembly in an energy storage cabinet with exhaust according to an example embodiment of the present disclosure;
FIG. 15 is a diagram of a second structure of an air duct side of an exhaust air duct assembly in an energy storage cabinet with exhaust according to an example embodiment of the present disclosure; and
FIG. 16 is a diagram of a third structure of an air duct side of an exhaust air duct assembly in an energy storage cabinet with exhaust according to an example embodiment of the present disclosure.

Reference numerals:
100: exhaust air duct assembly;
1: air duct housing; 11: air duct side wall; 111: first air intake section; 112: second air intake section; 12: circumferential retaining wall; 121: rotating hole; 122: folding edge; 13: air duct; 14: first air inlet; 15: second air inlet; 16: air intake cavity; 17: filter cavity; 18: air outlet cavity;
2: first flow guide member; 21: first flow guide plate; 211: first plate surface; 22: second flow guide plate; 221: second plate surface; 23: side edge; 24: air outlet; 25: connecting plate;
3: second flow guide member; 31: third flow guide plate; 311: third plate surface; 32: fourth flow guide plate; 33: rotating shaft;
4: first fan;
5: second fan;
6: filter member;
200: cabinet; 201: cabinet door; 2011: inner wall; 2012: exhaust port; 202: cabinet body;
300: battery pack;
400: power module.

### DESCRIPTION OF EMBODIMENTS

To make the objectives, technical solutions, and advantages of the present disclosure clearer, the following further describes the implementations of the present disclosure in detail with reference to the accompanying drawings.

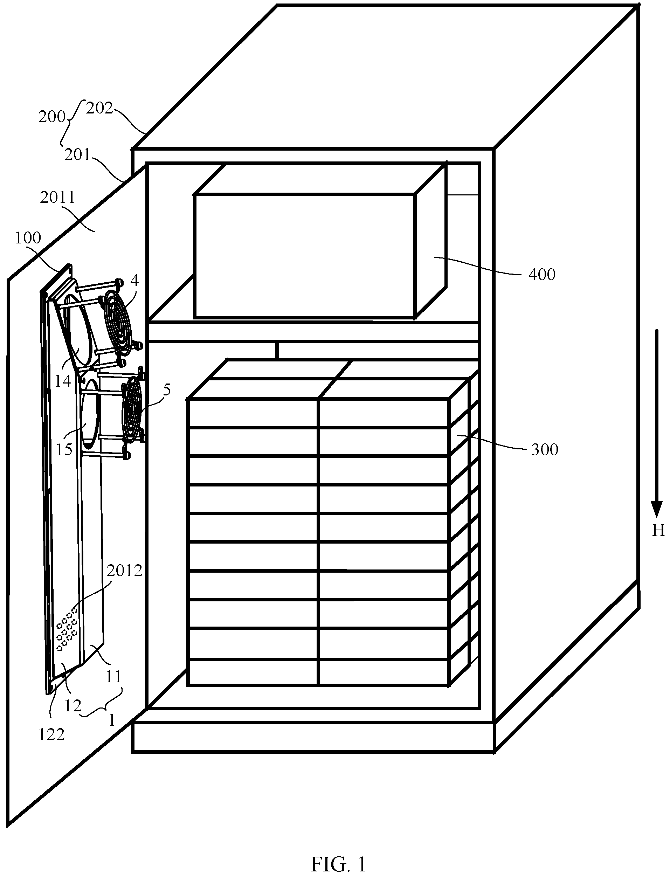

Embodiments relate to an energy storage cabinet with exhaust, and the energy storage cabinet with exhaust may be, for example, an energy storage cabinet of a battery. FIG. 1 is a diagram of a structure of an energy storage cabinet with exhaust according to an example embodiment of the present disclosure. As shown in FIG. 1, the energy storage cabinet with exhaust includes a cabinet 200 and an exhaust air duct assembly 100. The cabinet 200 is configured to accommodate a plurality of battery packs 300. The exhaust air duct assembly 100 is fastened to an inner wall 2011 of the cabinet 200. In other words, the exhaust air duct assembly 100 may be disposed inside the cabinet 200. In addition, the exhaust air duct assembly 100 includes an air duct housing 1 extending in a height direction H of the cabinet 200, a first flow guide member 2, a first fan 4, and a second fan 5. As shown in FIG. 1, the height direction H may be, for example, a direction pointing from the top to the bottom of the cabinet 200.

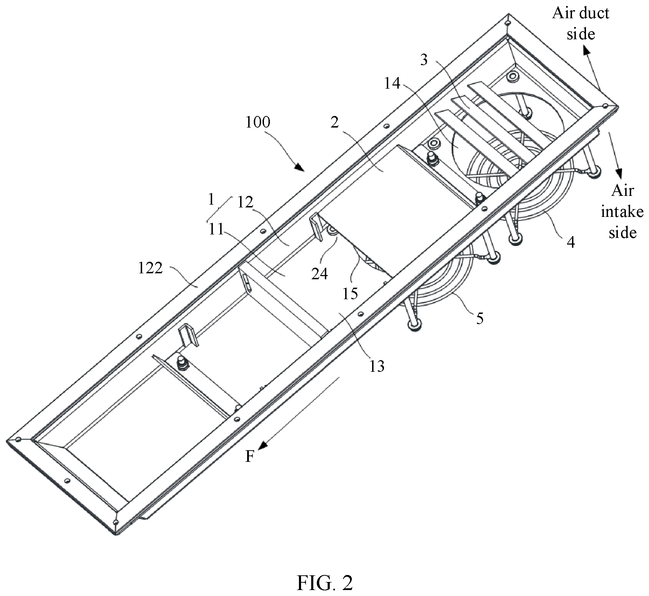

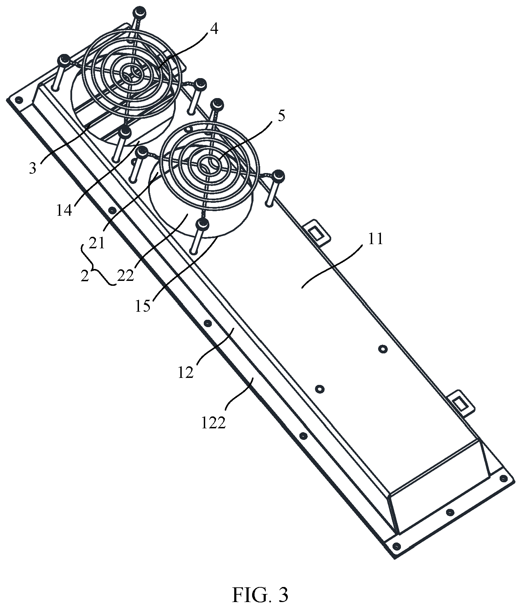

FIG. 2 is a diagram of a structure of an air duct side of an exhaust air duct assembly according to an example embodiment of the present disclosure. FIG. 3 is a diagram of a structure of an air intake side of an exhaust air duct assembly according to an example embodiment of the present disclosure. The air duct side is a side that is of the exhaust air duct assembly and on which the air duct housing 1 encloses an air duct, and the air intake side is a side that is of the exhaust air duct assembly and that is used to receive airflow. The air duct side and the air intake side are opposite to each other.

As shown in FIG. 1 and FIG. 3, the air duct housing 1 includes an air duct side wall 11 and a circumferential retaining wall 12. The air duct side wall 11 and the inner wall 2011 of the cabinet 200 are spaced apart and opposite to each other, and the circumferential retaining wall 12 surrounds an edge of the air duct side wall 11 and is disposed between the air duct side wall 11 and the inner wall 2011, so that the inner wall 2011 of the cabinet 200, the air duct side wall 11, and the circumferential retaining wall 12 may cooperate with each other to enclose an air duct 13 for airflow circulation. The air duct 13 is shown in FIG. 2. The air duct side wall 11 is provided with a first air inlet 14 and a second air inlet 15 that are distributed in the height direction H, and the second air inlet 15 is located below the first air inlet 14. In other words, the first air inlet 14 and the second air inlet 15 are provided in sequence in the height direction H, or the second air inlet 15 is closer to the bottom of the cabinet 200 than the first air inlet 14.

The first fan 4 is configured to draw gas inside the cabinet 200 into the air duct housing 1 through the first air inlet 14, and the second fan 5 is configured to draw gas inside the cabinet 200 into the air duct housing 1 through the second air inlet 15. During specific implementation, fans (including the first fan 4 and the second fan 5) in the exhaust air duct assembly 100 may extract gas in the cabinet 200 periodically or when gas concentration in the cabinet 200 reaches a specified threshold, and discharge gas out of the cabinet 200 through the air duct 13 provided by the exhaust air duct assembly 100, thereby achieving active exhaust of the energy storage cabinet.

As shown in FIG. 1 and FIG. 2, the first flow guide member 2 is located in the air duct housing 1 and between the air duct side wall 11 and the inner wall 2011, and covers at least a part of the second air inlet 15. A joint between a first edge of the first flow guide member 2 and the air duct side wall 11 is located between the first air inlet 14 and the second air inlet 15, a second edge of the first flow guide member 2 is spaced apart from the air duct side wall 11 to form an air outlet 24, and the first edge and the second edge are two edges that are opposite to each other in the height direction in the first flow guide member 2.

The first air inlet 14 may be disposed close to an end portion of a side of the air duct side wall 11. The second air inlet 15 is adjacent to the first air inlet 14, and may be spaced apart from the end portion of the side of the air duct side wall 11 by a long distance. In this case, after the air duct side wall 11 and the inner wall 2011 of the cabinet 200 cooperate to enclose the air duct 13, gas drawn by the first fan 4 and the second fan 5 into the air duct 13 flows in a direction from the first air inlet 14 to the second air inlet 15. That is, an air outlet direction F of the air duct 13 is a direction pointing from the first air inlet 14 to the second air inlet 15, and when the air duct housing 1 extends in the height direction of the cabinet 200, the air outlet direction F is consistent with the height direction H of the cabinet 200.

In other words, the exhaust air duct assembly may be provided with two air inlets in sequence in the air outlet direction of the internal air duct of the exhaust air duct assembly, and each air inlet corresponds to one fan. In addition, the exhaust air duct assembly covers at least a part of an air inlet in a downstream by using the first flow guide member, and a side that is of the first flow guide member and that is close to an air inlet in an upstream is blocked between the two air inlets, to isolate the two air inlets, thereby reducing vortexes of the two fans, reducing flow disturbance, and preventing airflow that is discharged by the upstream fan into the air duct through the air inlet in the upstream from escaping from the air inlet in the downstream. In this way, air intake interference between fans can be reduced, and exhaust efficiency can be increased.

As shown in FIG. 1, the cabinet 200 includes a cabinet door 201, an inner wall of the cabinet door 201 faces a plurality of battery packs 300, and the exhaust air duct assembly 100 is fastened to the inner wall of the cabinet door 201. In an example, the cabinet 200 may further include a cabinet body 202. The battery pack 300 may be placed in an accommodation cavity formed by the cabinet body 202. The cabinet door 201 may be rotatably connected to the cabinet body 202. When the cabinet door 201 is closed, the inner wall of the cabinet door 201 may face the plurality of battery packs 300 accommodated in the cabinet body 202.

When the exhaust air duct assembly 100 is disposed on an inner side of the cabinet door 201, the exhaust air duct assembly 100 may be used as a part of an air conditioning system to discharge air and dissipate heat for the battery pack 300. In this case, as shown in FIG. 1, an exhaust port 2012 may be provided on the cabinet door 201, and the exhaust port 2012 communicates with space enclosed by the air duct housing 1 and the inner wall 2011 of the cabinet 200. It may be understood that the exhaust port 2012 in FIG. 1 is shielded and shown by using dashed lines. In another example, the exhaust air duct assembly 100 may alternatively be disposed in the cabinet body 202 and disposed adjacent to the battery pack 300 (or a power module 400). Alternatively, the energy storage cabinet may include a plurality of exhaust air duct assemblies 100, and the plurality of exhaust air duct assemblies 100 may be disposed at different positions in the height direction of the cabinet 200 in the energy storage cabinet, to exchange gas with different densities. In addition, as shown in FIG. 1, the energy storage cabinet may further include the power module 400 accommodated in the cabinet body 202, and the power module 400 may be configured to control charging and discharging of the battery pack 300.

In an example, as shown in FIG. 2 and FIG. 3, the air duct housing 1 may be open. In this case, a side that is of the circumferential retaining wall 12 and that is away from the air duct side wall 11 may form a folding edge 122. When the exhaust air duct assembly is fastened to the cabinet 200, the air duct side of the exhaust air duct assembly may face the inner wall 2011 of the cabinet 200, so that the folding edge 122 may be attached to the inner wall 2011 and is fastened to the inner wall 2011 through a connecting member, for example, a screw, to seal, by using the inner wall 2011, the air duct 13 enclosed between the air duct side wall 11 and the circumferential retaining wall 12. The air duct housing 1 may be integrally rectangular, or may be circular. This is not limited in this embodiment.

It may be understood that the first flow guide member 2 in the air duct housing 1 may isolate only a part of the first air inlet 14 and only a part of the second air inlet 15, or may isolate the entire first air inlet 14 and the entire second air inlet 15. In an example, a height difference exists between a first end and a second end of the first flow guide member 2 in a direction perpendicular to the inner wall 2011, so that the second end of the first flow guide member 2 is lifted relative to the first end and is suspended relative to the air duct side wall 11, to form the air outlet 24. The direction perpendicular to the inner wall 2011 may alternatively be understood as a depth direction of the air duct 13. The depth direction may be parallel to an opening direction of the second air inlet 15.

Airflow (which may be referred to as "second airflow" below) that enters through the second air inlet 15 may enter the air duct housing 1 (the air duct 13) through the air outlet 24. In addition, the first edge of the first flow guide member 2 may be attached to the air duct side wall 11 in a width direction of the air duct side wall 11, to be connected to the air duct side wall 11 in a closed manner, to prevent, from entering the second air inlet 15 through a gap between the first edge of the first flow guide member 2 and the air duct side wall 11, airflow (which may be referred to as "first airflow" below) that enters through the first air inlet 14. The width direction of the air duct side wall 11 may be perpendicular to an extension direction of the exhaust air duct assembly 100 (or the air duct housing 1), to be perpendicular to the height direction H of the cabinet 200, and the width direction may be parallel to the inner wall 2011 of the cabinet 200. In the present disclosure, the width direction of the air duct side wall 11 may alternatively be understood as a width direction of the air duct 13; and the width direction is perpendicular to the air outlet direction F of the air duct 13, and is perpendicular to the depth direction of the air duct 13. When the air duct housing 1 is rectangular, a width of the air duct side wall 11 (the air duct 13) may be a distance between two side walls that are disposed opposite to each other and that are perpendicular to the height direction H (the air outlet direction F).

In an example, the first edge of the first flow guide member 2 may be continuous, and a length of the first edge may not be less than an inner diameter of the second air inlet 15. In another example, a length of the first edge of the first flow guide member 2 may be less than an inner diameter of the second air inlet 15, or the first edge may be segmented.

During specific implementation, an extension length of the first flow guide member 2 in the air outlet direction of the air duct 13 may be less than the inner diameter of the second air inlet 15, so that the first flow guide member 2 may cover only a part of the second air inlet 15. Alternatively, an extension length of the first flow guide member 2 in the air outlet direction of the air duct 13 may be greater than or equal to the inner diameter of the second air inlet 15, so that the first flow guide member 2 may cover the entire second air inlet 15, to fully isolate the first air inlet 14 from the second air inlet 15. That is, the first flow guide member 2 covers at least a part of the second air inlet 15.

The first fan 4 may be disposed directly opposite to the first air inlet 14, and is configured to discharge air into the air duct 13 through the first air inlet 14. Similarly, the second fan 5 may be disposed directly opposite to the second air inlet 15, and is configured to discharge air into the air duct 13 through the second air inlet 15 and the air outlet 24. In an example, the first fan 4 and the second fan 5 may be located outside the air duct housing 1, and located on an air intake side of the air duct housing 1, so that the first fan 4 and the second fan 5 can draw air from the cabinet 200, and discharge the air into the air duct 13 through the first air inlet 14 and the second air inlet 15. In addition, the first fan 4 and the second fan 5 may be fastened on the air duct housing 1 by using connecting members such as bolts or screws. Alternatively, positions of the first fan 4 and the second fan 5 may alternatively be fastened by using other members, to be independent of the air duct housing 1.

The following describes a structure of the first flow guide member 2.

As shown in FIG. 1, and FIG. 4, FIG. 5, or FIG. 6, the first flow guide member 2 is disposed in the air duct housing 1, and the first flow guide member 2 does not exceed, in a direction perpendicular to the inner wall 2011, a folding edge 122 that is on the circumferential retaining wall 12 and that is suitable for connecting to the inner wall 2011 of the cabinet 200, so that when the air duct housing 1 is assembled and fastened to the inner wall 2011, the first flow guide member 2 may be accommodated between the air duct side wall 11 and the inner wall 2011 that are opposite to each other. In other words, a distance between the air duct side wall 11 and the second edge that is in the first flow guide member 2 and that is spaced apart from the air duct side wall 11 is less than a distance between the air duct side wall 11 and the inner wall 2011.

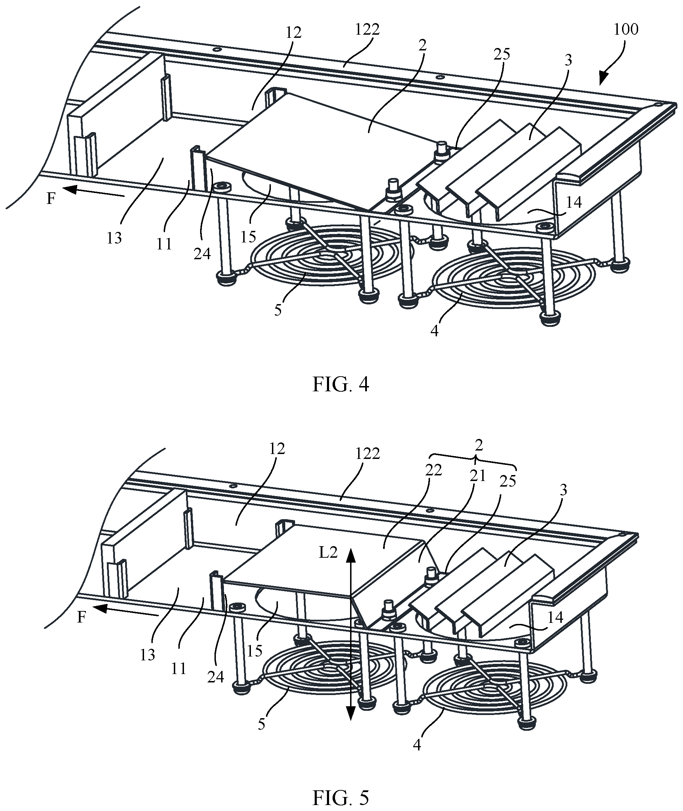

As shown in FIG. 4, FIG. 5, and FIG. 6, the first flow guide member 2 is disposed between the first air inlet 14 and the second air inlet 15 and covers the second air inlet 15. Therefore, first airflow that enters the air duct housing 1 (the air duct 13) through the first air inlet 14 flows in the air outlet direction F from a side that is of the first flow guide member 2 and that faces away from the second air inlet 15, and second airflow that enters the air duct housing 1 (the air duct 13) through the second air inlet 15 flows in the air outlet direction F from a side that is of the first flow guide member 2 and that faces the second air inlet 15. Therefore, the first flow guide member 2 not only can isolate the first air inlet 14 from the second air inlet 15, so that the airflow that enters the air duct through the two air inlets can respectively flow along two opposite sides of the first flow guide member 2, but also can separately provide a flow guide function for the airflow that enters the air duct through the two air inlets.

To reduce resistance of the first flow guide member 2 to the second airflow in the air outlet direction F, at least a part that is of a structure of the first flow guide member 2 and that is close to the first air inlet 14 may be disposed to tilt in the air outlet direction F toward a direction away from the air duct side wall 11, to provide a flow guide function for the second airflow. In an example, as shown in FIG. 1 and FIG. 4, the first flow guide member 2 is a plate-like member, and the first flow guide member 2 tilts in the height direction H (or the air outlet direction F) toward the direction away from the air duct side wall 11.

In another example, as shown in FIG. 5, the first flow guide member 2 includes a first flow guide plate 21 and a second flow guide plate 22 that are connected in a bent manner, the first edge of the first flow guide member 2 is an edge that is of the first flow guide plate 21 and that is close to the first air inlet 14, and the other edge of the first flow guide plate 21 is connected to the second flow guide plate 22. The second flow guide plate 22 covers at least a part of the second air inlet 15. In other words, the first flow guide plate 21 is close to the first air inlet 14 relative to the second flow guide plate 22, so that in the air outlet direction F, the first flow guide plate 21 is located in an upstream of the second flow guide plate 22. In addition, the first flow guide plate 21 tilts in the height direction H (or the air outlet direction F) toward the direction away from the air duct side wall 11. In other words, the first flow guide plate 21 may tilt relative to the air duct side wall 11, and the first flow guide plate 21 tilts in a manner that being farther away from the first air inlet 14 leads to being farther away from the air duct side wall 11.

In an example, as shown in FIG. 5, the second flow guide plate 22 may be perpendicular to an opening direction L2 of the second air inlet 15, so that the second flow guide plate 22 can be at a same height as the second edge that is in the first flow guide plate 21 and that is away from the first air inlet 14, without further reducing flow channel space of the first airflow at the second flow guide plate 22. In addition, a distance between the second flow guide plate 22 and the air duct side wall 11 is less than the distance between the air duct side wall 11 and the inner wall 2011, to avoid affecting assembly between the air duct housing 1 and the inner wall 2011.

In this embodiment of the present disclosure, an opening direction of an air inlet (including the first air inlet 14 and the second air inlet 15) may be understood as a direction parallel to a central axis of the air inlet. That the second flow guide plate 22 is perpendicular to the opening direction of the second air inlet 15 may be understood as that two plate surfaces that are of the second flow guide plate 22 and that face and face away from the second air inlet 15 respectively are perpendicular to the opening direction of the second air inlet 15. In this case, the second flow guide plate 22 may be a plate with a uniform thickness, and the two plate surfaces that are of the second flow guide plate 22 and that face and face away from the air duct side wall 11 are parallel to each other.

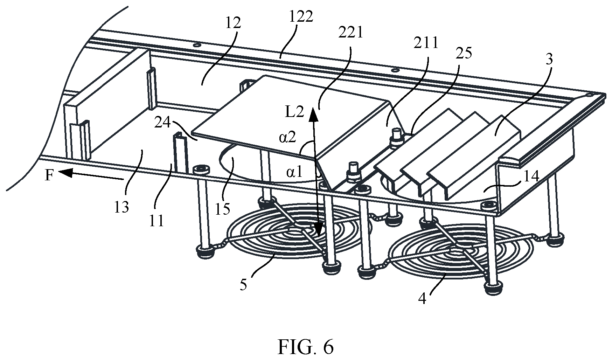

In another example, as shown in FIG. 1 and FIG. 6, the second flow guide plate 22 tilts in the height direction H (or the air outlet direction F) toward the direction away from the air duct side wall 11. That is, both plate surfaces that are of the second flow guide plate 22 and that face and face away from the second air inlet 15 may be disposed in a tilt manner relative to the air duct side wall 11. The plate surface that is of the second flow guide plate 22 and that faces the second air inlet 15 tilts in a manner that being farther away from the first air inlet 14 leads to being farther away from the air duct side wall 11, to provide guidance for the second airflow flowing from the second flow guide plate 22 to a side of the second air inlet 15. Similarly, the plate surface that is of the second flow guide plate 22 and that faces away from the second air inlet 15 also tilts in a manner that being farther away from the first air inlet 14 leads to being farther away from the air duct side wall 11. When the second flow guide plate 22 is a flat plate with a uniform thickness, the two plate surfaces that are of the second flow guide plate 22 and that face and face away from the air duct side wall 11 are parallel to each other, and included angles between the opening direction L2 of the second air inlet 15 provided on the air duct side wall 11 and the two plate surfaces are consistent.

In addition, as shown in FIG. 6, when the second flow guide plate 22 is disposed in a tilt manner, an included angle α1 between a first plate surface 211 that is of the first flow guide plate 21 and that faces away from the second air inlet 15 and the opening direction L2 of the second air inlet 15 is less than an included angle α2 between a second plate surface 221 that is of the second flow guide plate 22 and that faces away from the second air inlet 15 and the opening direction L2 of the second air inlet 15, so that in the air outlet direction F, a tilt degree of the entire first flow guide member 2 relative to the air duct side wall 11 is increasingly small. In this case, the first airflow flowing from the side that is of the first flow guide member 2 and that faces away from the second air inlet 15 may flow to an air outlet end of the air duct 13 through the first flow guide plate 21 and the second flow guide plate 22 in sequence, so that the first flow guide plate 21 and the second flow guide plate 22 provide guidance for the first airflow in the air outlet direction F.

It may be understood that, when the included angle α1 between the first plate surface 211 of the first flow guide plate 21 and the opening direction L2 of the second air inlet 15 is equivalent to the included angle α2 between the second plate surface 221 of the second flow guide plate 22 and the opening direction L2 of the second air inlet 15, the first flow guide plate 21 and the second flow guide plate 22 may be integrally a flat plate, to form a plate-like member shown in FIG. 4. However, when the included angle α1 between the first plate surface 211 of the first flow guide plate 21 and the opening direction L2 of the second air inlet 15 is less than the included angle α2 between the second plate surface 221 of the second flow guide plate 22 and the opening direction L2 of the second air inlet 15, the second flow guide plate 22 may be bent relative to the first flow guide plate 21, and the first flow guide member 2 may be approximately L-shaped or shovel-shaped.

In an example, the first flow guide plate 21 may alternatively be a flat plate with a uniform thickness, and a thickness of the first flow guide plate 21 may be consistent with a thickness of the second flow guide plate 22. An included angle between the first flow guide plate 21 and the second flow guide plate 22 may be an obtuse angle. In another example, the first flow guide plate 21 or the second flow guide plate 22 may alternatively be a plate-like structure with a variational thickness.

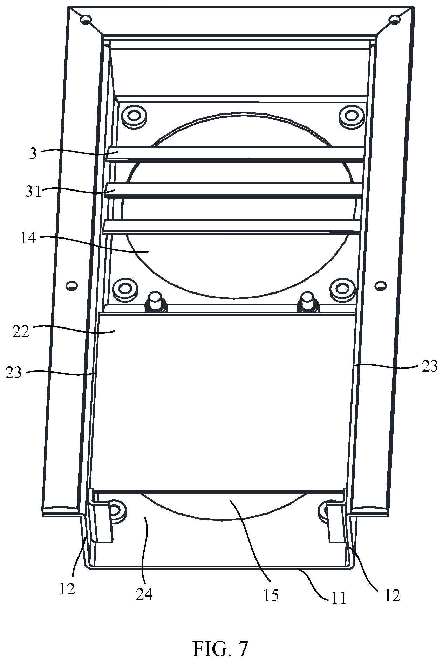

As shown in FIG. 7, two opposite side edges 23 of the first flow guide member 2 may be separately connected to the circumferential retaining wall 12, so that the first flow guide member 2 may cooperate with the air duct side wall 11 and the circumferential retaining wall 12 to enclose flow channel space. The second airflow generated by the second fan 5 enters the flow channel space through the second air inlet 15, and leaves the flow channel space through the air outlet 24. In addition, the first edge that is in the first flow guide member 2 and that is connected between the two opposite side edges 23 may be continuously attached to and connected to the air duct side wall 11, so that a remaining part of the flow channel space except the second air inlet 15 and the air outlet 24 is closed.

In another example, only one side edge 23 of the first flow guide member 2 may be connected to the circumferential retaining wall 12, and the other side edge 23 is spaced apart from the circumferential retaining wall 12 corresponding to the other side edge 23 by a gap. A width of the first flow guide member 2 may be less than a width of the air duct 13, so that there is another air outlet gap between the first flow guide member 2 and the air duct housing 1 in addition to the air outlet 24. In other words, the at least one side edge 23 of the first flow guide member 2 is connected to the circumferential retaining wall 12, and the side edge 23 is connected between the first edge and the second edge of the first flow guide member 2. In another example, there may be a gap between each of the two side edges of the first flow guide member 2 and the circumferential retaining wall 12. However, the first flow guide member 2 meets a requirement that the second air inlet 15 is partially covered or the entire second air inlet 15 is covered in a width direction of the air duct 13.

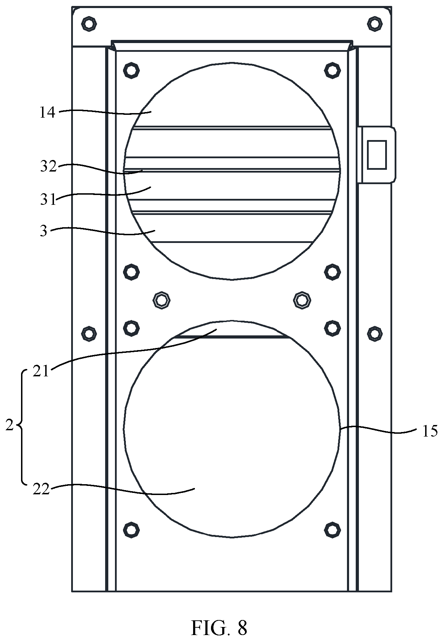

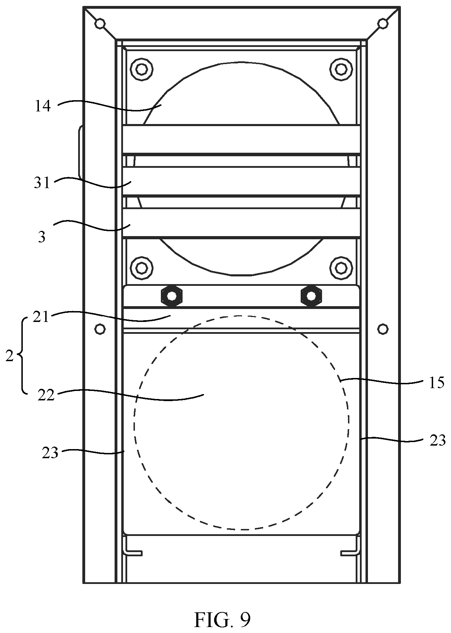

FIG. 8 and FIG. 9 respectively show a diagram of a front-view structure of an air intake side and a diagram of a front-view structure of an air outlet side of an exhaust air duct assembly. The second air inlet 15 in FIG. 9 is shielded by the first flow guide member 2 and is shown by using dashed lines. As shown in FIG. 1, FIG. 7, and FIG. 8, an extension length of the first flow guide member 2 in the height direction H (or the air outlet direction F) may be greater than or equal to an inner diameter of the second air inlet 15, so that an orthographic projection of the second air inlet 15 on a specified plane is located in an orthographic projection of the first flow guide member 2 on the specified plane. The specified plane is perpendicular to an opening direction of the second air inlet 15, so that the first flow guide member 2 covers the entire second air inlet 15.

In an example, a side (that is, the first edge of the first flow guide member 2) that is of the first flow guide plate 21 and that is close to the first air inlet 14 may be disposed between the first air inlet 14 and the second air inlet 15, or disposed close to the second air inlet 15. The first flow guide plate 2 may alternatively be configured to cover a part of the second air inlet 15, to provide guidance for the second airflow in the air outlet direction F.

The first flow guide member 2 may be welded together with the circumferential retaining wall 12 of the air duct housing 1 by using the side edge 23, to fasten a position of the first flow guide member 2. In another example, when a spacing interval between the first air inlet 14 and the second air inlet 15 is abundant, as shown in FIG. 4, FIG. 5, and FIG. 6, the first flow guide member 2 may further include a connecting plate 25. The connecting plate 25 is connected to one end that is of the first flow guide plate 21 and that is away from the second flow guide plate 22, and is attached to the air duct side wall 11. A connecting member such as a bolt or a screw may run through the connecting plate 25 and the air duct side wall 11, to fasten the first flow guide member 2. In another example, the first flow guide member 2 may be directly welded together with the air duct side wall 11.

According to the exhaust air duct assembly provided in this embodiment, the first flow guide member 2 for isolating the first air inlet 14 from the second air inlet 15 is disposed in the air duct housing 1 used to form the air duct 13, so that vortexes of two fans can be reduced, flow disturbance can be reduced, and air intake interference between the first fan 4 and the second fan 5 can be reduced, thereby increasing exhaust efficiency. However, the first flow guide member 2 may hinder, from flowing in the air outlet direction F, the first airflow that enters the air duct 13 through the first air inlet 14. To reduce impact caused by the first flow guide member 2 and reduce flowing resistance of the air duct to the first airflow generated by the first fan 4, the exhaust air duct assembly further includes a second flow guide member 3 configured to guide airflow entering the air duct housing 1 through the first air inlet 14, to increase exhaust efficiency of the first fan 4.

The following describes a structure of the second flow guide member 3.

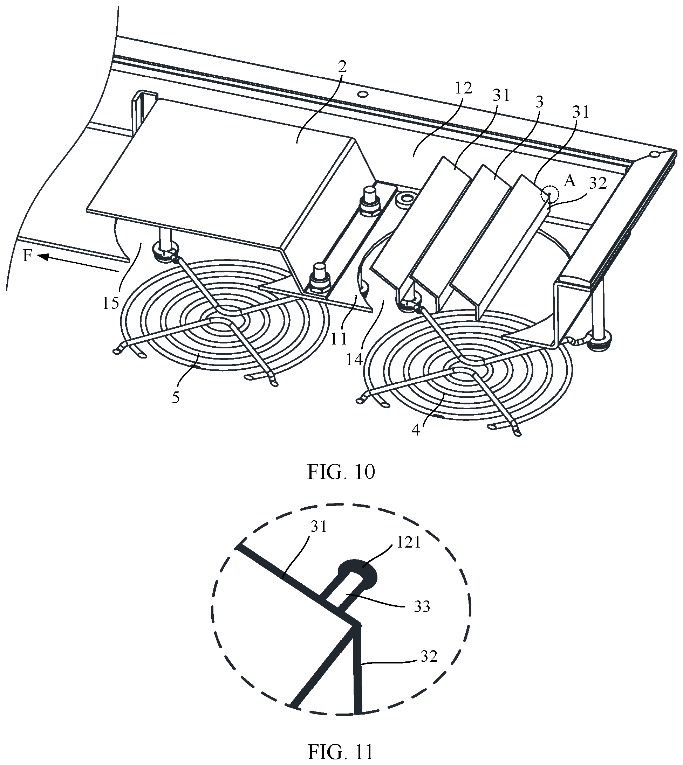

In an example, the exhaust air duct assembly may include a plurality of second flow guide members 3. FIG. 7 and FIG. 10 show an example in which the exhaust air duct assembly includes three second flow guide members 3. The plurality of second flow guide members 3 are located in the air duct housing 1, and are disposed corresponding to the first air inlet 14, to guide the first airflow that enters the air duct housing 1 (the air duct 13) through the first air inlet 14, so that the first airflow can flow in the air outlet direction F. For example, as shown in FIG. 8 and FIG. 9, an orthographic projection of at least a part of the second flow guide member 3 on a specified plane may be located in an orthographic projection of the first air inlet 14 on the specified plane, and the specified plane is perpendicular to an air inlet direction of the first air inlet 14. In another example, the exhaust air duct assembly may alternatively include only one second flow guide member 3.

For any second flow guide member 3, the second flow guide member 3 may include a third flow guide plate 31. In an example, as shown in FIG. 10 and FIG. 11, the third flow guide plate 31 is rotatably connected to the circumferential retaining wall 12. During specific implementation, a side edge of the third flow guide plate 31 may be connected to a rotating shaft 33, a rotating hole 121 is provided on the circumferential retaining wall 12, and the rotating shaft 33 may partially extend into the rotating hole 121, and may rotate in the rotating hole 121.

In another example, as shown in FIG. 1, FIG. 7, and FIG. 10, the third flow guide plate 31 is fastened to the circumferential retaining wall 12, and the third flow guide plate 31 tilts in the height direction H (or the air outlet direction F) toward a direction away from the air duct side wall 11, so that the third flow guide plate 31 guides the first airflow generated by the first fan 4 to the air outlet end of the air duct 13.

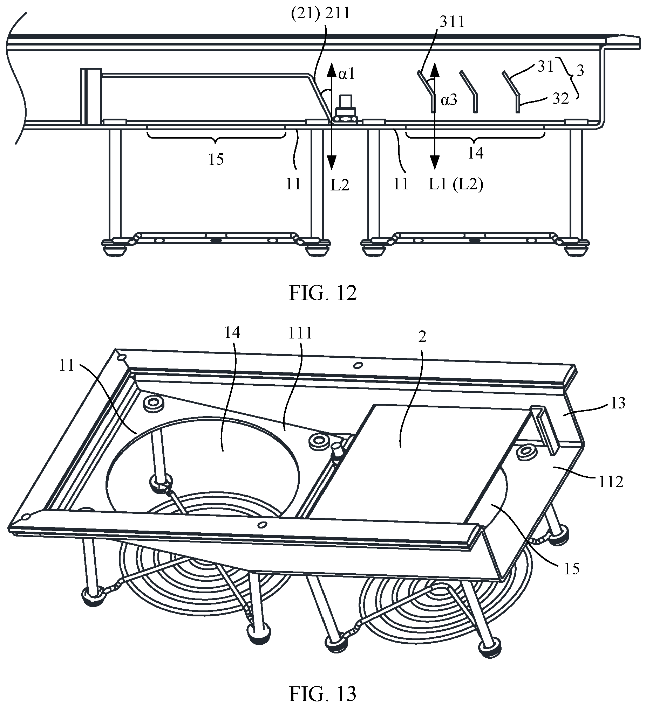

As shown in FIG. 12, when the third flow guide plate 31 is fastened to the circumferential retaining wall 12, an included angle α3 between a third plate surface 311 that is of the third flow guide plate 31 and that faces away from the second air inlet 15 and the opening direction L2 of the second air inlet 15 is not greater than an included angle α1 between a first plate surface 211 that is of the first flow guide plate 21 and that faces away from the second air inlet 15 and the opening direction L2 of the second air inlet 15. Therefore, tilt degrees of the third flow guide plate 31, the first flow guide plate 21, and the second flow guide plate 22 are increasingly small relative to the air duct side wall 11. When the first airflow flows to the air outlet end of the air duct 13 through the third flow guide plate 31, the first flow guide plate 21, and the second flow guide plate 22 in sequence, the first airflow can be guided to flow to the air outlet end of the air duct 13. In an example, the included angle α3 between the third plate surface 311 of the third flow guide plate 31 and the opening direction L2 of the second air inlet 15 may be basically equal to the included angle α1 between the first plate surface 221 of the first flow guide plate 21 and the opening direction L2 of the second air inlet 15.

When the exhaust air duct assembly includes a plurality of second flow guide members 3, some of the plurality of second flow guide members 3 may be rotatably connected to the circumferential retaining wall 12, and the other of the second flow guide members 3 may be fastened to the circumferential retaining wall 12. In addition, some of the plurality of second flow guide members 3 may be plate-like members, so that only the third flow guide plate 31 is included. The other of the second flow guide members 3 may further include a fourth flow guide plate 32. The fourth flow guide plate 32 is connected to the third flow guide plate 31 in a bent manner, so that the second flow guide member 3 may be approximately L-shaped or shovel-shaped.

In an example, as shown in FIG. 12, the fourth flow guide plate 32 is connected to one end that is of the third flow guide plate 31 and that is close to the air duct side wall 11, and the fourth flow guide plate 32 is parallel to the opening direction L1 of the first air inlet 14. When entering the air duct housing 1 (the air duct 13) through the first air inlet 14, the first airflow generated by the first fan 4 may be first divided by the fourth flow guide plate 32, and is then guided by the fourth flow guide plate 32 to the air outlet end of the air duct 13. As shown in FIG. 12, an included angle between the fourth flow guide plate 32 and the third flow guide plate 31 may be an obtuse angle.

FIG. 12 shows an example in which the opening direction L1 of the first air inlet 14 is parallel to the opening direction L2 of the second air inlet 15. In another example, the air duct side wall 11 of the air duct housing 1 is designed, so that the opening direction L1 of the first air inlet 14 intersects with the opening direction L2 of the second air inlet 15.

The following describes a structure of the air duct housing 1.

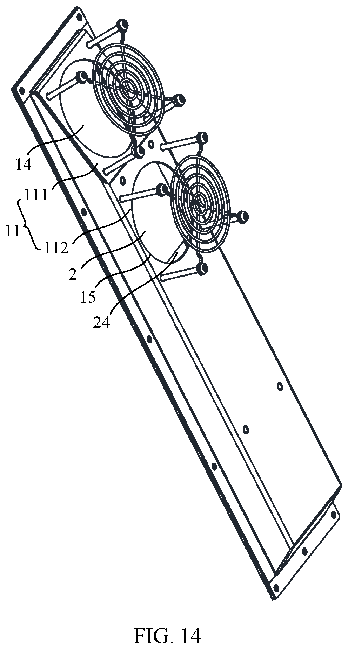

As shown in FIG. 13 and FIG. 14, the air duct side wall 11 includes a first air intake section 111 and a second air intake section 112. The first air inlet 14 is provided on the first air intake section 111, and the second air inlet 15 is provided on the second air intake section 112. The first air intake section 111 is connected to the second air intake section 112 in a bent manner, and one end that is of the first air intake section 111 and that is away from the second air intake section 112 tilts toward a direction close to the first flow guide member 2. In other words, a central axis of the first air inlet 14 may intersect with a central axis of the second air inlet 15 on a side (an air duct side) that is of the air duct housing 1 and on which the air duct 13 is formed.

In an example, a part of the air duct side wall 11 of an air intake section in the air duct housing 1 may be lifted toward an air duct side to form the first air intake section 111, and the remaining part maintains a flat plate shape to serve as the second air intake section 112. An included angle between the first air intake section 111 and the second air intake section 112 may be an obtuse angle. When the exhaust air duct assembly is assembled together with a mounting carrier, for example, the cabinet 200 (for example, the cabinet door 201), the opening direction L1 of the first air inlet 14 and the mounting carrier may be improved from being perpendicular to each other to intersecting with each other at an obtuse angle, so that the mounting carrier can be used as a flow guide structure to guide the first airflow to the air outlet end of the air duct 13. In this way, the first airflow generated by the first fan 4 is prevented from directly blowing the mounting carrier, for example, the cabinet door 201, thereby reducing flowing resistance of air intake.

In addition, as shown in FIG. 14, when the first air inlet 14 tilts relative to the second air inlet 15, the first fan 4 may be disposed directly opposite to the first air inlet 14, and the second fan 5 is disposed directly opposite to the second air inlet 15, so that the first fan 4 and the second fan 5 are also disposed opposite to each other in a tilt manner.

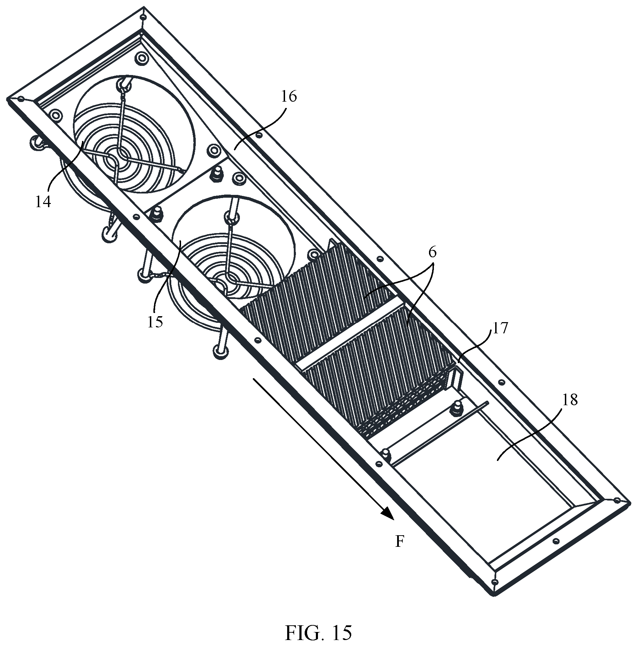

As shown in FIG. 1 and FIG. 15, the air duct housing 1 may include an air intake cavity 16, a filter cavity 17, and an air outlet cavity 18 that are disposed in sequence in the height direction H (or the air outlet direction F). The first air inlet 14 and the second air inlet 15 are located in the air intake cavity 16, and the first air intake section 111 and the second air intake section 112 may be used as the air duct side wall 11 of a part at which the air intake cavity 16 is located. The air outlet cavity 18 may be located at an air outlet end of the air duct 13, and the air outlet cavity 18 may communicate with an exhaust port 2012 provided on the cabinet 200, to discharge airflow in the air duct housing 1 (which may specifically be the air duct 13). When the exhaust air duct assembly 100 is assembled together with a mounting carrier, for example, the cabinet door 201, an exhaust port 2012 on the cabinet door 201 may be directly opposite to the air outlet cavity 18, so that after entering the air intake cavity 16 through the first air inlet 14 and the second air inlet 15, the airflow generated by the first fan 4 and the second fan 5 may enter the air outlet cavity 18 through the filter cavity 17, and is discharged from the exhaust port 2012 corresponding to the air outlet cavity 18.

As shown in FIG. 15, the exhaust air duct assembly may further include a filter member 6, and the filter member 6 is located in the filter cavity 17. In other words, the filter member 6 may be located on a side that is of the second air inlet 15 and that is away from the first air inlet 14, and the filter member 6 may be configured to filter a medium that enters the first air inlet 14 and the second air inlet 15 from an external environment, to prevent a harmful medium from entering, through the first air inlet 14 and the second air inlet 15, the cabinet in which the exhaust air duct assembly is located.

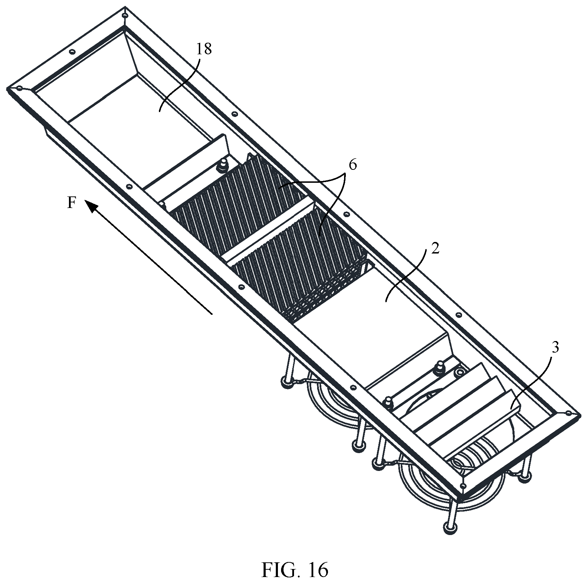

In an example, the filter element 6 may use a labyrinth sealing structure made of a material, for example, polyurethane, and perform a sealing function by generating a throttling effect on gas by using a comb gap. For example, a plurality of filter air ducts of a small size may be formed in the filter member 6, and the filter air ducts in the filter member 6 may be disposed in a manner of intersecting with the air duct 13. In addition, as shown in FIG. 2 and FIG. 16, in a depth direction of the air duct 13, the filter member 6 may be higher than the first flow guide member 2, so that the filter member 6 may protect the entire air outlet 24.

According to the exhaust air duct assembly provided in this embodiment of the present disclosure, the first flow guide member 2 configured to isolate the first air inlet 14 from the second air inlet 15 is disposed in the air duct housing 1 that encloses the air duct 13, so that vortexes of two fans can be reduced, flow disturbance can be reduced, air intake interference between the first fan 4 and the second fan 5 can be reduced, and exhaust efficiency can be increased. The second flow guide member 3 is disposed at the first air inlet 14, to provide a guidance function for airflow, that enters the air duct housing 1 (which may specifically be the air duct 13) through the first air inlet 14, to flow in the air outlet direction of the air duct 13, thereby reducing flowing resistance of the air duct and further increasing exhaust efficiency. In addition, the air duct side wall 11 of the air duct housing 1 is disposed in a manner that an end that is of the first air intake section 111 on which the first air inlet 14 is located and that is away from the second air intake section 112 on which the second air inlet 15 is located tilts toward a direction close to the first flow guide member 2, so that the mounting carrier, for example, the cabinet door 201, integrated with the exhaust air duct assembly 100 can be used as a flow guide structure to guide the first airflow to the air outlet end of the air duct 13, thereby reducing flowing resistance of air intake and further increasing exhaust efficiency.

In an example, the energy storage cabinet with exhaust may be applied to a scenario such as a shopping mall, an industrial park, an optical storage charging station, or a factory, and discharge air once every minute according to a requirement of T/CEC373-2020. An exhaust capacity is not less than a volume of a prefabricated compartment.

In the descriptions of the present disclosure, it should be understood that an orientation or positional relationship indicated by the term (if any) "center", "longitudinal", "transverse", "length", "width", "thickness", "above", "beneath", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the accompanying drawings, and is merely for ease of describing this application and simplifying description, but does not indicate or imply that an apparatus or an element referred to needs to have a specific orientation or be constructed and operated in a specific orientation, and therefore cannot be understood as a limitation on this application.

Unless otherwise specified and limited, terms (if any) "mounting ", "join", and "connection" should be understood in a broad sense. For example, the terms may be a fastened connection, a detachable connection, or an integrated connection, a mechanical connection, a direct connection, an indirect connection through an intermediate medium, communication inside two elements, or an interaction relationship between two elements. A person of ordinary skill in the art may understand specific meanings of the foregoing terms in this application based on a specific case.

In addition, the terms (if any) "first" and "second" are merely intended for a purpose of description, and shall not be understood as an indication or implication of relative importance or implicit indication of the number of indicated technical features. Therefore, a feature limited by "first" or "second" may explicitly or implicitly include one or more of the features. In the descriptions of this application, unless otherwise specifically limited, "a plurality of" means two or more.

In this application, unless otherwise explicitly stipulated and restricted, that a first feature is "on" or "under" a second feature may include that the first feature and the second feature are in direct contact, or may include that the first feature and the second feature are not in direct contact but in contact by using other features between the first feature and the second feature. Moreover, the first feature being "on" or "above" or "over" the second feature includes the first feature being directly above and obliquely above the second feature, or simply means that the level of the first feature is higher than that of the second feature. That the first feature is "below", "under", or "beneath" the second feature includes that the first feature is right below and at the inclined bottom of the second feature or merely indicates that a level of the first feature is lower than that of the second feature.

In the descriptions of this specification, descriptions using reference terms "some implementations", "an implementation", "some implementations", "an exemplary implementation", "an example", "a specific example", or "some examples" mean that specific features, structures, materials, or characteristics described with reference to the implementation or example are included in at least one implementation or example of this application.

The foregoing descriptions are merely embodiments of this application, but are not intended to limit this application. Any modification, equivalent replacement, improvement, or the like made without departing from the principle of this application shall fall within the protection scope of this application.

## Claims

1. An energy storage cabinet with exhaust, wherein the energy storage cabinet with exhaust comprises a cabinet (200) and an exhaust air duct assembly (100), the cabinet (200) is configured to accommodate a plurality of battery packs (300), the exhaust air duct assembly (100) is fastened to an inner wall (2011) of the cabinet (200), and the exhaust air duct assembly (100) comprises an air duct housing (1) extending in a height direction (H) of the cabinet (200), a first flow guide member (2), a first fan (4), and a second fan (5);
the air duct housing (1) comprises an air duct side wall (11) and a circumferential retaining wall (12), the air duct side wall (11) and the inner wall (2011) are spaced apart and opposite to each other, and the circumferential retaining wall (12) surrounds an edge of the air duct side wall (11) and is disposed between the air duct side wall (11) and the inner wall (2011);
the air duct side wall (11) is provided with a first air inlet (14) and a second air inlet (15) that are distributed in the height direction (H), and the second air inlet (15) is located below the first air inlet (14); and the first fan (4) is configured to draw gas inside the cabinet (200) into the air duct housing (1) through the first air inlet (14), and the second fan (5) configured to draw gas inside the cabinet (200) into the air duct housing (1) through the second air inlet (15); and
the first flow guide member (2) is located in the air duct housing (1) and between the air duct side wall (11) and the inner wall (2011), and covers at least a part of the second air inlet (15); and a joint between a first edge of the first flow guide member (2) and the air duct side wall (11) is located between the first air inlet (14) and the second air inlet (15), a second edge of the first flow guide member (2) is spaced apart from the air duct side wall (11) to form an air outlet (24), and the first edge and the second edge are two edges that are opposite to each other in the height direction (H) in the first flow guide member (2).

2. The energy storage cabinet according to claim 1, wherein a distance between the second edge of the first flow guide member (2) and the air duct side wall (11) is less than a distance between the air duct side wall (11) and the inner wall (2011).

3. The energy storage cabinet according to claim 1, wherein the first flow guide member (2) is a plate-like member, and the first flow guide member (2) tilts in the height direction (H) toward a direction away from the air duct side wall (11).

4. The energy storage cabinet according to claim 1, wherein the first flow guide member (2) comprises a first flow guide plate (21) and a second flow guide plate (22) that are connected in a bent manner, the first edge of the first flow guide member (2) is an edge that is of the first flow guide plate (21) and that is close to the first air inlet (14), the other edge of the first flow guide plate (21) is connected to the second flow guide plate (22), and the first flow guide plate (21) tilts in the height direction (H) toward a direction away from the air duct side wall (11); and the second flow guide plate (22) covers at least a part of the second air inlet (15).

5. The energy storage cabinet according to claim 4, wherein the second flow guide plate (22) is perpendicular to an opening direction (L2) of the second air inlet (15); and a distance between the second flow guide plate (22) and the air duct side wall (11) is less than a distance between the air duct side wall (11) and the inner wall (2011).

6. The energy storage cabinet according to claim 4, wherein the second flow guide plate (22) tilts in the height direction (H) toward a direction away from the air duct side wall (11), and an included angle between a first plate surface (211) that is of the first flow guide plate (21) and that is away from the second air inlet (15) and an opening direction (L2) of the second air inlet (15) is less than an included angle between a second plate surface (221) that is of the second flow guide plate (22) and that is away from the second air inlet (15) and the opening direction (L2) of the second air inlet (15).

7. The energy storage cabinet according to claim 1, wherein an orthographic projection of the second air inlet (15) on a specified plane is located in an orthographic projection of the first flow guide member (2) on the specified plane, and the specified plane is perpendicular to an opening direction of the second air inlet (15).

8. The energy storage cabinet according to claim 1, wherein at least one side edge (23) of the first flow guide member (2) is connected to the circumferential retaining wall (12), and the side edge (23) is connected between the first edge and the second edge.

9. The energy storage cabinet according to claim 1, wherein the exhaust air duct assembly (100) further comprises at least one second flow guide member (3), and the second flow guide member (3) is configured to guide airflow that enters the air duct housing (1) through the first air inlet (14); and
the at least one second flow guide member (3) comprises a third flow guide plate (31), wherein the third flow guide plate (31) is rotatably connected to the circumferential retaining wall (12); or the third flow guide plate (31) is fastened to the circumferential retaining wall (12), and the third flow guide plate (31) tilts in the height direction (H) toward a direction away from the air duct side wall (11).

10. The energy storage cabinet according to claim 9, wherein when the third flow guide plate (31) is fastened to the circumferential retaining wall (12), an included angle between a third plate surface (311) that is of the third flow guide plate (31) and that is away from the second air inlet (15) and an opening direction (L2) of the second air inlet (15) is not greater than an included angle between a first plate surface (211) that is of the first flow guide plate (21) and that is away from the second air inlet (15) and the opening direction (L2) of the second air inlet (15).

11. The energy storage cabinet according to claim 10, wherein the second flow guide member (3) further comprises a fourth flow guide plate (32), the fourth flow guide plate (32) is connected to an end that is of the third flow guide plate (31) and that is close to the air duct side wall (11), and the fourth flow guide plate (32) is parallel to an opening direction (L1) of the first air inlet (14).

12. The energy storage cabinet according to any one of claims 1 to 11, wherein the air duct side wall (11) comprises a first air intake section (111) and a second air intake section (112), the first air inlet (14) is provided on the first air intake section (111), and the second air inlet (15) is provided on the second air intake section (112); and
the first air intake section (111) and the second air intake section (112) are connected in a bent manner, and an end that is of the first air intake section (111) and that is away from the second air intake section (112) tilts toward a direction close to the first flow guide member (2).

13. The energy storage cabinet according to any one of claims 1 to 11, wherein the exhaust air duct assembly (100) further comprises a filter member (6); and
the air duct housing (1) comprises an air intake cavity (16), a filter cavity (17), and an air outlet cavity (18) that are disposed in sequence in the height direction (H), wherein the first air inlet (14) and the second air inlet (15) are located in the air intake cavity (16), the filter member (6) is located in the filter cavity (17), and the air outlet cavity (18) communicates with an exhaust port (2012) provided on the cabinet (200), to discharge airflow in the air duct housing (1).

14. The energy storage cabinet according to any one of claims 1 to 11, wherein the cabinet (200) comprises a cabinet door (201), an inner wall of the cabinet door (201) faces the plurality of battery packs (300), and the exhaust air duct assembly (100) is fastened to the inner wall of the cabinet door (201).

15. The energy storage cabinet according to claim 14, wherein the exhaust port (2012) is provided on the cabinet door (201), and the exhaust port (2012) communicates with space enclosed by the air duct housing (1) and the inner wall (2011).
